Europäisches Patentamt

European Patent Office

Office européen des brevets

(11) Publication number: **0 498 325 A1**

# EUROPEAN PATENT APPLICATION

(21) Application number: **92101693.7**

(22) Date of filing: **03.02.92**

(51) Int. Cl.5: **B01D 53/36**, B01J 23/08

(30) Priority: **05.02.91 JP 36917/91**
**28.05.91 JP 154139/91**

(43) Date of publication of application:
**12.08.92 Bulletin 92/33**

(84) Designated Contracting States:
**BE CH DE FR GB IT LI NL SE**

(71) Applicant: **IDEMITSU KOSAN COMPANY LIMITED**
**1-1, Marunouchi 3-chome Chiyoda-ku Tokyo(JP)**

(72) Inventor: **Hayasaka, Toshiaki, c/o Idemitsu Kosan Comp. Ltd.**
**1280, Kamiizumi**
**Sodegaura-shi, Chiba-ken(JP)**
Inventor: **Kimura, Takuma, c/o Idemitsu Kosan Comp. Ltd.**
**1280, Kamiizumi**
**Sodegaura-shi, Chiba-ken(JP)**

(74) Representative: **Dost, Wolfgang, Dr. rer. nat. Dipl.-Chem. et al**
**Patent- u. Rechtsanwälte Bardehle, Pagenberg, Dost, Altenburg Frohwitter & Partner Galileiplatz 1**
**W-8000 München 80(DE)**

(54) Exhaust gas purifying catalyst and an exhaust gas purifying method using the catalyst.

(57) A catalyst for purifying an exhaust gas comprises at least gallium as a main catalyst and a fire resistant oxide (except for zeolite) as a support. A method of reducing and eliminating a nitrogen oxide in an exhaust gas in the presence of a hydrocarbon having a ratio of an overall THC concentration/$NO_x$ concentration of 0.5 - 50 at a reaction temperature of 200 - 800°C in an oxidative atmosphere.

## BACKGROUND OF THE INVENTION

### 1. FIELD OF THE INVENTION

The present invention concerns an exhaust gas purifying catalyst which decomposes, into non-toxic gases, nitrogen oxides discharged from mobile internal combustion engines used, for example, in diesel cars, stationary internal combustion engines used, for example, in cogeneration systems and various industrial furnaces such as boilers, as well as a method of purifying the exhaust gas using such catalyst.

### 2. DESCRIPTION OF THE RELATED ART

Generally, exhaust gases discharged from automobiles, stationary internal combustion engines and various industrial furnaces contain a great amount of nitrogen oxides represented by NO and $NO_2$ ($NO_x$). It is said that such $NO_x$ not only causes photochemical smog but also induces disease in man's respiratory organs. As a method of decreasing $NO_x$, an exhaust gas processing technique of a so-called ternary catalyst system is established that eliminates $NO_x$ by reduction in an exhaust gas of low oxygen content such as that from gasoline cars by using a reducing agent such as carbon monoxide or hydrocarbon.

On the other hand, in the case of an exhaust gas containing a great amount of oxygen such as that discharged from large-scaled stationary exhaust emission sources such as boilers, a selective $NO_x$ reduction process for decreasing the amount of $NO_x$ by external addition of ammonia is now under actual operation, which produces some effect. However, the former method is applicable only to an exhaust gas from a gasoline engine in which the oxygen concentration is extremely low whereas the latter method is difficult to use in small-sized stationary exhaust emission sources or mobile exhaust emission sources from a standpoint of handling because ammonia is used.

In view of the above, various methods have been studied for using hydrogen, carbon monoxides or various hydrocarbons as reducing agents other than ammonia, but most of them have the drawback that they are a non-selective catalytic reduction process which can eliminate nitrogen oxides only after oxygen in the exhaust gas has been consumed completely. Although the following methods have been proposed so far as a novel selective catalytic reduction process capable of overcoming such a drawback ( methods of selectively reducing and eliminating nitrogen oxides even under the coexistence of oxygen), none of them can provide quite satisfactory results.

Published unexamined Japanese patent application Hei 2-149317 proposes a method of using either (1) a catalyst comprising a hydrogen type mordenite or clinoptilolite or (2) a catalyst comprising a hydrogen type mordenite or clinoptilolite supporting a metal such as Cu, Cr, Mn, Fe and Ni, and bringing exhaust smoke containing oxygen resulting from combustion of various fuel into contact with the above-mentioned catalyst under the coexistence of an organic compound thereby eliminating nitrogen oxides in the exhaust smoke.

According to this method, a denitrating ratio of 30 to 60% is achieved under the conditions of a reaction temperature of 300 to 600°C and a gas hourly space velocity (GHSV) of 1200 $h^{-1}$, but a denitrating effect under a high GHSV condition, i.e., a condition approximate to that of practical use is not clear. Further, no literatures gives a description of the aging of the catalytic activity and a specified life of the catalyst. Further, since the catalyst is evaluated using a pseudo exhaust gas containing no $SO_x$, the resistance of the catalyst to $SO_x$ is uncertain.

Published unexamined Japanese patent application Hei 1-130735 proposes a method of using a catalyst in which a zeolite ion-exchanged with a transition metal (Cu, Co, Ni, Fe, Mg, Mn or the like) is carried on a fire resistant support, and purifying nitrogen oxides even in an oxidative atmosphere.

This is a method of purifying nitrogen oxides in an exhaust gas from a gasoline engine at high efficiency even in a lean air/fuel ratio region, in which the oxygen concentration in the exhaust gas is about 3% at most. Accordingly, it is uncertain whether or not nitrogen oxides can be selectively denitrated by reduction also in an exhaust gas such as that from a diesel engine in which the oxygen concentration is from 5 to 10%. Also in the examples, the $NO_x$ eliminating ratio tends to be lowered greatly along with an increase in the oxygen concentration.

Published unexamined Japanese patent application Sho 63-283727 proposes a method of using a catalyst in which a metal such as Cu, V, Mn, Fe or Cr is supported on a hydrophobic zeolite with a $SiO_2/Al_2O_3$ ratio of 15 or more, and decreasing nitrogen oxides in an oxygen containing exhaust gas from an internal combustion engine in the presence of carbon monoxide and one kind or more of hydrocarbons.

In this method, the denitrating ratio is decreased to as low a value as 4 to 26% in the case of using a zeolite catalyst supporting a metal other than copper. On the other hand, in the case of using a copper-zeolite catalyst, there is the problem that the copper ingredient is readily poisoned by $SO_x$ though relatively high activity is obtained. The oxygen concentration in the exhaust gas shown in the examples is 1.6% and it is uncertain whether or not nitrogen oxides can also be reduced selectively for denitration if the oxygen concentration is higher, for example, as in an exhaust gas from a diesel engine.

Publish unexamined Japanese patent application Sho 63-100919 proposes a method of using a catalyst in which copper is supported on a porous support of alumina, silica or zeolite, and eliminating nitrogen oxides in an exhaust gas containing oxygen in the presence of a hydrocarbon.

In this method, the denitrating ratio is from 10 to 25% and no high denitrating activity is obtainable. Further, since the catalyst contains copper, there is the problem that the copper ingredient is readily poisoned by $SO_x$. Further, the oxygen concentration in the exhaust gas shown in the examples is 2.1% and it is uncertain whether or not nitrogen oxides can also be reduced selectively for denitration if the oxygen concentration is higher.

It is, accordingly, an object of the present invention to provide an exhaust gas purifying catalyst capable of purifying nitrogen oxides into a non-toxic gas at high efficiency even when the oxygen concentration in the exhaust gas is high as well as a method of purifying the exhaust gas using such catalyst.

## SUMMARY OF THE INVENTION

The exhaust gas purifying catalyst according to the present invention is an catalyst for reducing and eliminating nitrogen oxides in the exhaust gas in the presence of a hydrocarbon in an oxidative atmosphere, the catalyst comprising gallium as a main catalyst, and a fire resistant oxide (except for a zeolite) as a promoter.

The oxidative atmosphere means herein an atmosphere containing an amount of oxygen in excess of that required for completely oxidizing a carbon monoxide, hydrogen and hydrocarbon contained in an exhaust gas and a reducing substance of a hydrocarbon added as required in this process and converting them into $H_2O$ and $CO_2$.

The catalyst may include at least one selected from the group consisting of iron, nickel, cobalt, zirconium, manganese, chromium, molybdenum, copper and rare earth elements of transition elements as promoters.

As a Ga source for the gallium (Ga) ingredient, any of compounds convertible into oxides upon preparation of the catalyst or during use thereof for reaction may be used. Such compounds include gallium nitrates, gallium sulfates, gallium oxides, gallium halides, gallium carbonates, gallium hydroxide and gallium organic acid salts.

The content of gallium in the catalyst is usually from 0.01 to 10 by weight, preferably, 0.1 to 5 by weight when the fire resistant oxide is 100 by weight. If the content is less than 0.01 by weight, a high purification rate provided by the present invention is not obtained. On the other hand, if the content exceeds 10 by weight, no further improvement to the purification rate can be observed.

The fire resistant oxides (except for zeolite) are not especially limited, but, for example, alumina ($Al_2O_3$), titania ($TiO_2$), magnesia (MgO), and zirconia can be named. These oxides may be used singly or in combination.

The catalyst may take any shape, for example, of pellet, plate, column or lattice.

The catalyst according to the present invention can be prepared by any of the conventional methods, for example, using a compound containing Ga and a compound containing one of the promoters or a fire resistant oxide or one of precursors of these compounds by ion-exchange, impregnation, physical mixing, gas phase deposition or coprecipitation. Alternatively, a catalyst preparation method of coating a catalyst on a lattice-like support of cordierite, mullite or aluminum or on a substrate made of a metal net or plate may be adopted.

A method of purifying an exhaust gas according to the present invention is characterized by the steps of bringing an exhaust gas into contact with the catalys in the presence of a hydrocarbon in an oxidative atmosphere and eliminating nitrogen oxides in the exhaust gas by reducing them into $N_2$ and $H_2O$.

The hydrocarbon described above may be a hydrocarbon remaining in the exhaust gas, but it is preferred to add a hydrocarbon from the outside if the amount of the hydrocarbon is less than its amount required for causing the denitrating reaction or if it is not contained at all in the exhaust gas.

There is no particular restriction on the kind of the hydrocarbon to be added for this purpose and they may be methane, LPG, gasoline, gas oil, kerosene, A heavy oil or the like.

The amount of the hydrocarbon present in the exhaust gas is usually 0.5 to 50, preferably, 1 to 20, in THC concentration/$NO_x$ concentration. The THC (total hydrocarbon) concentration means the concentration of a hydrocarbon as converted to methane. For instance, if the $NO_x$ concentration is 1000 ppm, the THC

EP 0 498 325 A1

concentration is from 0.05 to 5.0%.

If the amount of the hydrocarbon present is lower than the above-mentioned lower limit, no denitrating effect appears. If it is higher than the above-mentioned upper limit, it is not preferred because of a reduction in the economy of the entire system or abnormal heat generation in the catalyst layer caused by the combustion heat of the hydrocarbon, although the denitrating ratio is increased.

The catalytic reaction temperature is set to 200 to 800°C, and preferably, 300 to 600°C. Usually, the denitrating ratio is increased as the temperature is higher, but, if it exceeds 800°C, undesirable degradation of the catalyst occurs and, on the other hand, the denitrating ratio is lowered if the temperature is lower than 200°C.

The gas hourly space velocity (GHSV) is set usually to 2,000 to 200,000 $h^{-1}$, and preferably, 5,000 to 100,000 $h^{-1}$. If the GHSV is less than 2,000 $h^{-1}$, the amount of the catalyst used is increased though the denitrating ratio is high and, on the other hand, if it is higher than 200,000 $h^{-1}$, the denitrating ratio is lowered.

Exhaust gases as the object of the purification method according to the present invention are those gases containing $NO_x$ and oxygen in an oxidative atmosphere as a whole and are exhaust gases discharged from mobile internal combustion engines of gasoline cars which perform lean combustion or diesel cars, stationary internal combustion engines, for example, of cogeneration, and various kinds of industrial furnaces such as boilers.

**DETAILED DESCRIPTION OF THE PREFERRED EMBODIMENT(S)**

The result of testing using a purifying catalyst according to the present invention including gallium as a main catalyst and a fire resistant oxide as a support will be described hereinafter with reference to Tables 1 - 3.

Example 1:

An aqueous solution of gallium nitrate was impregnated with 60 grams of $\gamma$-alumina [AS-2 (trade name) manufactured by Shokubai Kasei KK] by ordinary impregnation to cause the $\gamma$-alumina to support the gallium.

This catalyst precursor was dried at 120°C for 20 hours and then sintered at 500°C for 3 hours in a flow of air. The amount of gallium supported by this precursor was 2% by weight.

Subsequently, 1(unity) cc of this precursor was filled into a stainless reactive tube, was gradually raised in temperature in a flow of helium, and was thermally treated at 500°C for 30 minutes to prepare a catalyst of this example.

Then, the temperature of the catalyst bed was set to 400°C and then a model gas of helium balance as a processed gas was introduced into the tube at GHSV = 6000$h^{-1}$ for an evaluation test of this catalyst. The composition of the model gas was NO: 1%, $O_2$: 10%, and $C_3H_8$: 3% (9% as the THC concentration). Therefore, in this example, the THC concentration/$NO_x$ concentration was 9.

This evaluation was made by analyzing the gas from the reactive tube exit in gas chromatography and calculating the NO purification rate on the basis of the concentration of $N_2$ produced by the reduction of NO. The results are shown in Table 1 below.

Examples 2 - 4:

A catalyst was prepared similarly to Example 1, the reaction conditions in the respective Examples were modified as shown below and the evaluation tests of the respective catalysts were made as in example 1. The results are shown in Table 1.

In Example 2, the concentration of propane in the processed gas was 1% (3% as the THC concentration).

In Example 3, the temperature of the catalyst bed was 500°C.

In Example 4, the concentration of propane in the processed gas was 1% and the temperature of the catalyst bed was 500°C.

Control 1:

A catalyst was prepared as in Example 1, the concentration of propane in the processed gas was changed to 0% and an evaluation test of the catalyst similar to that in Example 1 was made. The results are

4

shown in Table 1.

Control 2:

A catalyst of this Control was prepared by heat-treating $\gamma$-alumina with no gallium being supported, similarly to Example 1. Thereafter, an evaluation test of the catalyst similar to that in Example 1 was made. The results of the testing are shown in Table 1.

Controls 3 - 5:

Catalysts were prepared similarly to Control 2, the reaction conditions of the respective Controls were modified as shown below and evaluation tests similar to that made in Control 2 were made. The results of the testing are shown in Table 1.

In Control 3, the concentration of propane in the processed gas was 1% (3% as the THC concentration).

In Control 4, the temperature of the catalyst bed was 500 °C.

In Control 5, the concentration of propane in the processed gas was 1% and the temperature of the catalyst bed was 500 °C.

Control 6:

By ordinary impregnation, an aqueous solution of copper acetate was impregnated with 60 grams of $\gamma$-alumina to cause the $\gamma$-alumina to support the copper and then a catalyst of this Control was prepared as in Example 1.

Thereafter, an evaluation test of the catalyst was made as in Example 3. The results of the testing are shown in Table 1.

## Table 1

| Ex-am-ple | Catalyst System | Re-ac-tion Temp (°C) | Processed Gas Comp.(%) | | | THC con/ $NO_x$ con | Puri-fica-tion rate (%) |
|---|---|---|---|---|---|---|---|
| | | | NO | $O_2$ | Pro-pane (THC) | | |
| 1 | Ga/$\gamma$-alumina | 400 | 1 | 10 | 9 | 9 | 68 |
| 2 | Ga/$\gamma$-alumina | 400 | 1 | 10 | 3 | 3 | 52 |
| 3 | Ga/$\gamma$-alumina | 500 | 1 | 10 | 9 | 9 | 82 |
| 4 | Ga/$\gamma$-alumina | 500 | 1 | 10 | 3 | 3 | 63 |
| Con-trol | | | | | | | |
| 1 | Ga/$\gamma$-alumina | 400 | 1 | 10 | 0 | 0 | 3 |
| 2 | $\gamma$-alumina | 400 | 1 | 10 | 9 | 9 | 29 |

| 3 | γ-alumina | 400 | 1 | 10 | 3 | 3 | 20 |
|---|-----------|-----|---|----|---|---|----|
| 4 | γ-alumina | 500 | 1 | 10 | 9 | 9 | 33 |
| 5 | γ-alumina | 500 | 1 | 10 | 3 | 3 | 26 |
| 6 | Cu/γ-alumina | 500 | 1 | 10 | 9 | 9 | 39 |

Example 5:

Similarly to Example 1, a catalyst precursor was prepared. Fifty cubic centimeters of the precursor were filled into a stainless reactive tube, was gradually raised in temperature in a flow of dried air, and was heat-treated at 500°C for 30 minutes to prepare a catalyst of this Example.

A real exhaust gas consisting of a diesel exhaust gas and an added LPG gas was passed at $GHSV = 6000h^{-1}$ through a tube maintained at 200°C into the reactive tube heated to 500°C.

The composition of this diesel exhaust gas was $NO_x$: 1000ppm, O2: 8%, $SO_x$: 140ppm, CO: 400ppm, $CO_2$: 10%, and THC: 230ppm. The LPG gas added was such that the overall hydrocarbon was 0.21% (the overall THC concentration was 0.63%) in the processed gas. Therefore, in this example, the overall THC concentration/$NO_x$ concentration was 6.3.

A gas from the reactive tube exit was also passed through a tube maintained at 200°C to a chemi-luminescent detector to measure the $NO_x$ concentration. The $NO_x$ purification rate after the catalyst reaction was calculated by measuring and comparing the $NO_x$ concentrations before and after introduction of the exhaust gas into the reactive tube. The results of this evaluation are shown in Table 2 below.

Control 7:

A catalyst was prepared as in Example 5, and an evaluation test of the catalyst similar to that in Example 5 was made using a diesel exhaust gas with no added LPG gas. The results are shown in Table 2 below.

Table 2

| | Catalyst system | Reaction temp. (°C) | LPG addition amount (THC con %) | Overall THC con/$NO_x$ con | Purification rate (%) |
|---|----------------|--------------------|-------------------------------|----------------------------|-----------------------|
| Example 5 | Ga/γ-alumina | 500 | 0.61 | 6.3 | 63 |
| Control 7 | Ga/γ-alumina | 500 | 0.00 | 0.2 | 6 |

Example 6:

An aqueous solution of gallium nitrate was impregnated with 60 grams of zirconia [RC-100 (trade name) manufactured by Daiichi Kigenso Kagaku Kogyo KK] using an ordinary impregnation to cause the zirconia to support the gallium and a catalyst of this Example was then prepared similarly to Example 1.

Thereafter, an evaluation test of the catalyst was made similarly to Example 3. The results of the testing are shown in Table 3.

Example 7:

An aqueous solution of gallium nitrate was impregnated with 60 grams of titania [P-25 (trade name) manufactured by Nippon Aerojil KK] using an ordinary impregnation to cause the titania to support the gallium and a catalyst of this Example was then prepared similarly to Example 1.

Thereafter, an evaluation test of the catalyst was made similarly to Example 3. The results of the testing are shown in Table 3.

Table 3

| Example | Catalyst system | Reaction temp (°C) | Processed gas comp. (%) | | | THC con/ NO$_2$ con | Purification rate (%) |
|---|---|---|---|---|---|---|---|
| | | | NO | O$_2$ | Propane (THC) | | |
| 6 | Ga/zirconia | 500 | 1 | 10 | 9 | 9 | 89 |
| 7 | Ga/titania | 500 | 1 | 10 | 9 | 9 | 64 |

Consideration to the Examples and Controls:

According to a method of purifying an exhaust gas involving Examples 1 - 4 as shown, the γ-alumina which supported Ga was used as the catalyst. In the catalyst reaction, the evaluation test was made at the temperature of 400 - 500°C with the THC concentration/NO$_x$ concentration of the model gases being 3 - 9. Therefore, it will be seen that high NO purification rate (52-82%) are obtained even if the concentration of oxygen in the exhaust gas is high, for example, 10%.

It will be seen from Examples 3 and 4 that the NO purification rates are improved by raising the reactive temperature and the THC concentration/NO concentration in the scope of the present invention.

In contrast, according to Control 1, only a low NO purification rate (3%) was obtained because the THC concentration/Nox concentration was 0 although the Ga-supporting γ-alumina catalyst which was the same as Example 1 was used.

According to Controls 2 - 5, since the γ-alumina catalyst does not support Ga, the resulting NO purification rate was low, for example, 20 - 30% even if the reaction conditions were similar to those of the Examples.

According to Control 6, it will be seen that as high a purification rate as those of the Examples could not be obtained because the γ-alumina catalyst was used which supported Cu and not Ga.

According to the exhaust gas purification method of Example 5, the γ-alumina which supported Ga was used as the catalyst, the catalyst reaction temperature was 400 - 500°C and the evaluation test was made with the overall THC concentration/Nox concentration of the actual exhaust gas as 6.3. Therefore, it will be seen that the concentration of oxygen of the exhaust gas was high, for example, 8% and a high Nox purification rate (63%) was obtained even if SO$_x$ was contained.

In contrast, according to Control 7, the γ-alumina catalyst which supported Ga, which catalyst was the same as that of the Examples was used, but only a low NO$_x$ purification rate (6%) was obtained because the overall THC concentration/NO$_x$ concentration was 0.2.

According to the exhaust gas purification method of Examples 6, 7, it will be seen that high NO$_x$ purification rates were similarly obtained even when zirconia and titania were used as the fire resistant oxides in place of the γ-alumina of the above Examples.

The results of testing using purifying catalysts according to the present invention and including gallium, a promoter and a fire resistant oxide will be described hereinafter with reference to Tables 4 - 6.

Example 8:

By impregnation similar to that performed in Example 1, a mixed aqueous solution of gallium nitrate and iron nitrate was impregnated with 60 grams of zirconia [RC-100 (trade name) manufactured by Daiichi Kigenso Kagaku Kogyo KK] to cause the zirconia to support the gallium and iron.

This catalyst precursor was dried at 120°C for 20 hours and then calcined at 500°C for 3 hours in a flow of air. The amounts of gallium and iron supported by this precursor were 2 and 0.2, respectively, by weight when the zirconia was 100 by weight.

Subsequently, 1 cc of this precursor was filled into a stainless reactive tube, was gradually raised in temperature in a flow of helium, and was heat-treated at 500°C for 30 minutes to prepare a catalyst of this example.

Then, the temperature of the catalyst bed was set to 500°C and then a model gas of helium balance as a processed gas was introduced into the tube at GHSV = 6000h$^{-1}$ and its evaluation test of this catalyst was made. The composition of the model gas was NO: 1%, $O_2$: 10%, and $C_3H_8$: 1% (3% as the THC concentration). Therefore, in this example, the THC concentration/$NO_x$ concentration was 3.

The results of this evaluation are shown in Table 4 below, as in Table 1.

Examples 9 - 14:

A catalyst was prepared similarly to Example 8 and an evaluation test of the catalyst similar to that of Example 8 was made. In each Example, a compound containing a gallium component, a compound containing a promoter component and a fire resistant oxide used for preparing the catalyst were modified below. The results are shown in Table 4.

In Example 9, gallium nitrate, cobalt nitrate and zirconia were used. In this Example, the amounts of gallium and cobalt supported by the catalyst precursor were 2 and 0.2, respectively, by weight when the zirconia used was 100 by weight.

In Example 10, gallium nitrate, lanthanum nitrate and zirconia were used. In this Example, the amounts of gallium and lanthanum supported by the catalyst precursor were 2 and 0.2, respectively, by weight when the zirconia used was 100 by weight.

In Example 11, gallium nitrate, copper nitrate and zirconia were used. In this Example, the amounts of gallium and copper supported by the catalyst precursor were 2 and 0.2, respectively, by weight when the zirconia used was 100 by weight.

In Example 12, gallium nitrate, iron nitrate and γ-alumina [AS-2(trade name) manufactured by Shokubai Kasei KK] were used. In this Example, the amounts of gallium and iron supported by the catalyst precursor were 2 and 0.2, respectively, by weight when the γ-alumina used was 100 by weight.

In Example 13, gallium nitrate, zirconium oxynitrate and γ-alumina were used. In this Example, the amounts of gallium and zirconium supported by the catalyst precursor were 2 and 0.2, respectively, by weight when the γ-alumina used was 100 by weight.

In Example 14, gallium nitrate, iron nitrate and titania [P-25(trade name) manufactured by Nippon Aerojil KK] were used. In this Example, the amounts of gallium and iron supported by the catalyst precursor were 2 and 0.2, respectively, by weight when the titania used was 100 by weight.

Controls 8 - 14:

Controls 8 - 14 were obtained by modifying only the concentration of $C_3H_8$ in the processed gas from 1 to 0% in the evaluation test of the catalyst in Examples 8 - 14. The NO purification rates of the respective Controls were evaluated similarly to Example 8 and the results are shown in Table 4.

Control 15:

This Control was obtained by using only iron nitrate and γ-alumina without using gallium nitrate in preparing the catalyst in Example 12. In this Control, the amount of iron supported by the precursor was 0.2 by weight when the γ-alumina used was 100 by weight. The results of evaluating the NO purification rate of this Control were shown in Table 4.

Control 16:

This Control was obtained by using only iron nitrate and zirconia without using gallium nitrate in preparing the catalyst in Example 8. In this Control, the amount of iron supported by the precursor was 0.2 by weight when the zirconia used was 100 by weight. The results of evaluating the NO purification rate of this Control were shown in Table 4.

Control 17:

This Control was obtained by using only iron nitrate and titania without using gallium nitrate in preparing the catalyst in Example 14. In this Control, the amount of iron supported by the precursor was 0.2 by weight when the titania used was 100 by weight. The results of evaluating the NO purification rate of this Control were shown in Table 4.

<p align="center">Table 4</p>

| Example | Catalyst system | Reaction temp. (%) | Processed gas comp. (%) | | | THC con/ NO$_x$ con | Purification rate (%) |
|---|---|---|---|---|---|---|---|
| | | | NO | O$_2$ | Propane (THC) | | |
| 8 | Ga-Fe/ zirconia | 500 | 1 | 10 | 3 | 3 | 88 |
| 9 | Ga-Co/ zirconia | 500 | 1 | 10 | 3 | 3 | 83 |
| 10 | Ga-La/ zirconia | 500 | 1 | 10 | 3 | 3 | 80 |
| 11 | Ga-Cu/ zirconia | 500 | 1 | 10 | 3 | 3 | 75 |
| 12 | Ga-Fe/γ- alumina | 500 | 1 | 10 | 3 | 3 | 79 |
| 13 | Ga-Zr/γ- alumina | 500 | 1 | 10 | 3 | 3 | 78 |
| 14 | Ga-Fe/ titania | 500 | 1 | 10 | 3 | 3 | 74 |
| Control | | | | | | | |
| 8 | Ga-Fe/ zirconia | 500 | 1 | 10 | 0 | 0 | 5 |
| 9 | Ga-Co/ zirconia | 500 | 1 | 10 | 0 | 0 | 4 |
| 10 | Ga-La/ zirconia | 500 | 1 | 10 | 0 | 0 | 3 |
| 11 | Ga-Cu/ zirconia | 500 | 1 | 10 | 0 | 0 | 5 |
| 12 | Ga-Fe/γ- alumina | 500 | 1 | 10 | 0 | 0 | 6 |
| 13 | Ga-Zr/γ- alumina | 500 | 1 | 10 | 0 | 0 | 4 |
| 14 | Ga-Fe/ titania | 500 | 1 | 10 | 0 | 0 | 2 |
| 15 | Fe/γ- alumina | 500 | 1 | 10 | 3 | 3 | 34 |
| 16 | Fe/zir- conia | 500 | 1 | 10 | 3 | 3 | 30 |
| 17 | Fe/tit- ania | 500 | 1 | 10 | 3 | 3 | 26 |

Examples 15 - 21:

Examples 15 - 21 were obtained by changing only the temperatures of the catalyst beds from 500 to 400°C in the evaluation test of the catalysts in Examples 8 - 14. The results of evaluating the NO purification rates of the respective Examples are shown in Table 5.

Examples 22 - 28:

Examples 22 - 28 were obtained by changing only the temperatures of the catalyst beds from 500 to 300°C in the evaluation test of the catalysts in Examples 8 - 14. The results of evaluating the NO purification rates of the respective Examples are shown in Table 5.

Controls 18 - 20:

Controls 18 - 20 were obtained by changing only the temperatures of the catalyst beds from 500 to 400°C in the evaluation test of the catalysts in Controls 15 - 17. The results of evaluating the NO purification rates of the respective Controls are shown in Table 5.

Controls 21 - 23:

Controls 21 - 23 were obtained by changing only the temperatures of the catalyst beds from 500 to 300°C in the evaluation test of the catalysts in Controls 15 - 17. The results of evaluating the NO purification rates of the respective Controls are shown in Table 5.

## Table 5

| Example | Catalyst system | Reaction temp (°C) | Processed gas comp. (%) | | | THC con/ $NO_x$ con | Purification rate (%) |
|---|---|---|---|---|---|---|---|
| | | | NO | $O_2$ | Propane (THC) | | |
| 15 | Ga-Fe/ zirconia | 400 | 1 | 10 | 3 | 3 | 70 |
| 16 | Ga-Co/ zirconia | 400 | 1 | 10 | 3 | 3 | 68 |
| 17 | Ga-La/ zirconia | 400 | 1 | 10 | 3 | 3 | 65 |
| 18 | Ga-Cu/ zirconia | 400 | 1 | 10 | 3 | 3 | 60 |
| 19 | Ga-Fe/γ-alumina | 400 | 1 | 10 | 3 | 3 | 68 |
| 20 | Ga-Zr/γ-alumina | 400 | 1 | 10 | 3 | 3 | 66 |
| 21 | Ga-Fe/ titania | 400 | 1 | 10 | 3 | 3 | 65 |
| 22 | Ga-Fe/ zirconia | 300 | 1 | 10 | 3 | 3 | 35 |
| 23 | Ga-Co/ zirconia | 300 | 1 | 10 | 3 | 3 | 33 |
| 24 | Ga-La/ zirconia | 300 | 1 | 10 | 3 | 3 | 32 |
| 25 | Ga-Cu/ zirconia | 300 | 1 | 10 | 3 | 3 | 30 |
| 26 | Ga-Fe/γ-alumina | 300 | 1 | 10 | 3 | 3 | 34 |
| 27 | Ga-Zr/γ-alumina | 300 | 1 | 10 | 3 | 3 | 33 |
| 28 | Ga-Fe/ titania | 300 | 1 | 10 | 3 | 3 | 31 |

EP 0 498 325 A1

| Con-trol | | | | | | | |
|---|---|---|---|---|---|---|---|
| 18 | Fe/γ-alumina | 400 | 1 | 10 | 3 | 3 | 28 |
| 19 | Fe/zir-conia | 400 | 1 | 10 | 3 | 3 | 25 |
| 20 | Fe/tit-ania | 400 | 1 | 10 | 3 | 3 | 21 |
| 21 | Fe/γ-alumina | 300 | 1 | 10 | 3 | 3 | 13 |
| 22 | Fe/zir-conia | 300 | 1 | 10 | 3 | 3 | 12 |
| 23 | Fe/tit-ania | 300 | 1 | 10 | 3 | 3 | 10 |

**Example 29:**

A catalyst precursor was prepared by using gallium nitrate, iron nitrate and zirconia similarly to Example 15. Fifty cubic centimeters of this catalyst precursor were filled into a stainless reactive tube, was gradually raised in temperature in a flow of dried air and was heat-treated at 500°C for 30 minutes to prepare the catalyst of this Example.

Similarly to Example 5, an LPG gas was added to a diesel exhaust gas as the processed gas to prepare an actual exhaust gas, which was then passed through a tube maintained at 200°C and introduced at GHSV = 6000h$^{-1}$ into the reactive tube maintained at 500°C. The results of this evaluation are shown in Table 6 below.

**Example 30:**

This Example was obtained by using gallium nitrate, iron nitrate and γ-alumina as the materials for preparing the catalyst in Example 29. The results of evaluating the NOx purification rate of this Example are shown in Table 6.

**Examples 31, 32:**

Examples 31, 32 were obtained by changing only the temperatures of the catalyst beds from 500 to 400°C in the evaluation test of the catalysts in Examples 29, 30. The results of evaluating the NO purification rates of the respective Examples are shown in Table 6.

**Examples 33, 34:**

Examples 33, 34 were obtained by changing only the temperatures of the catalyst beds from 500 to 300°C in the evaluation test of the catalysts in Examples 29, 30. The results of evaluating the NO purification rates of the respective Examples are shown in Table 6.

**Control 24:**

In this Control, a catalyst precursol was obtained by using an iron nitrate and γ-alumina similarly to Control 15 and the evaluation test of the catalyst was made similarly to Example 29. The results of evaluating the NO$_x$ purification rate of the Control are shown in Table 6.

12

Control 25, 26:

Catalysts were prepared similarly to Control 24, the reaction conditions of the respective Controls were modified as shown below and evaluation tests similar to that made in Control 24 were made. The results of the testing are shown in Table 6.

In Control 25, the temperature of the catalyst bed was 400°C.

In Control 26, the temperature of the catalyst bed was 300 °C.

## Table 6

| Example | Catalyst system | Reaction temp. (°C) | LPG add-ition amount (THC con) | Overall THC con/ $NO_x$ con | Purifi-cation rate (%) |
|---|---|---|---|---|---|
| 29 | Ga-Fe/ zirconia | 500 | 0.61 | 6.3 | 83 |
| 30 | Ga-Fe/γ-alumina | 500 | 0.61 | 6.3 | 76 |
| 31 | Ga-Fe/ zirconia | 400 | 0.61 | 6.3 | 66 |
| 32 | Ga-Fe/γ-alumina | 400 | 0.61 | 6.3 | 63 |

| Example | Catalyst system | Reaction temp. (°C) | LPG addition amount | Overall THC con/ $NO_x$ con | Purification rate (%) |
|---|---|---|---|---|---|
| 33 | Ga-Fe/ zirconia | 300 | 0.61 | 6.3 | 31 |
| 34 | Ga-Fe/γ-alumina | 300 | 0.61 | 6.3 | 30 |
| Control | | | | | |
| 24 | Fe/γ-alumina | 500 | 0.61 | 6.3 | 28 |
| 25 | Fe/γ-alumina | 400 | 0.61 | 6.3 | 14 |
| 26 | Fe/γ-alumina | 300 | 0.61 | 6.3 | 6 |

Consideration to the Examples and Controls:

According to a method of purifying an exhaust gas involving Examples 8 - 14 as shown, the catalyst which includes Ga as the main catalyst and Fe, Co, Cu, Zr or La as the promoter which are supported by zirconia, γ-alumina or titania as the support was used. In the catalyst reaction, the evaluation test was made at the temperature of 500°C with the THC concentration/$NO_x$ concentration of the model gas being 3. Therefore, it will be seen that the performance of the catalyst was further improved compared to the catalyst containing no promoter in Example 4 and high NO purification rate (74-88%) are obtained.

13

In contrast, according to Controls 8 - 14, only low NO purification rates (2 - 6%) were obtained because they included no $C_3H_8$ added and the THC concentration/$NO_x$ concentration was 0 although the catalyst which was the same as Examples 8 - 14 was used.

According to Controls 15 - 17, the main catalyst of Ga is not contained even if the promoter and support in the present invention is contained in the catalyst. Thus, it will be seen that the purification rate is low, for example, 26 - 34% compared to the Examples.

According to Examples 15 - 21, the reaction temperatures were lowered from 500°C in Examples 8 - 14 to 400°C. Therefore, the NO purification rates were lowered to 60 - 70% compared to Examples 8 - 14. It will, however, be seen that the NO purification rates are high compared to 21 - 28% of Controls 18 - 20 where no main catalyst of Ga is contained.

According to Examples 22 - 28, the reaction temperatures were lowered from 500°C in Examples 8 - 14 to 300°C. Therefore, the NO purification rates were considerably lowered to 30 - 35% compared to Examples 8 - 14. It will, however, be seen that the NO purification rates are high compared to 10 - 13% of Controls 21 - 23 where no main catalyst of Ga is contained and that the Examples provide excellent purification performance even if the reaction temperature is low.

According to Examples 29, 30 where the actual exhaust gas was used in place of a model gas, it will be seen that high $NO_x$ purification rates (76 - 83%) were obtained at the reaction temperature of 500°C in spite of the existence of $SO_x$ and water in the gas in addition to oxygen, compared to 28% of Control 24 where the catalyst contains no Ga as the main catalyst in the present invention.

According to Examples 31, 32, the reaction temperatures were lowered from 500°C in Examples 29, 30 to 400°C. Therefore, the NO purification rates were lowered to 63 - 66% compared to Examples 29, 30. It will be seen that the NO purification rates are high compared to 14% of Control 25 where the catalyst contains no Ga as the main catalyst in the present invention.

According to Examples 33, 34, the reaction temperatures were lowered from 500°C in Examples 29, 30 to 300°C. Therefore, the NO purification rates were considerably lowered to 30 - 31% compared to Examples 29, 30. It will be seen that the $NO_x$ purification rates are high compared to 6% of Control 26 where the catalyst contains no Ga as the main catalyst in the present invention and that the Examples provide excellent purification performance even if the reaction temperatures are low.

According to the exhaust gas purification catalyst of the present invention, the catalyst activity is high even in low temperature and the catalyst has a long life. According to a method of purifying an exhaust gas using this catalyst, a nitrogen oxide can be reduced and eliminated at high efficiency even if the oxygen in the exhaust gas has a high concentration.

## Claims

1. An exhaust gas purifying catalyst for reducing and eliminating a nitrogen oxide in an exhaust gas in an oxidative atmosphere in the presence of hydrocarbon, the catalyst containing gallium as a main catalyst and a fire resistant oxide (except for zeolite) as a support.

2. An exhaust gas purifying catalyst according to claim 1, wherein the catalyst includes at least one selected from the group of iron, nickel, cobalt, zirconium, manganese, chromium, molybdenum, copper and rare earth elements of transition elements as promoters.

3. An exhaust gas purifying catalyst according to claim 2, wherein the gallium and promoter each are a composition convertible to an oxide when the catalyst is prepared or reaction occurs.

4. An exhaust gas purifying catalyst according to claim 1, wherein the gallium content of the catalyst is 0.01 - 10 by weight when the fire resistant oxide is 100 by weight.

5. An exhaust gas purifying catalyst according to claim 2, wherein the promoter content of the catalyst is 0.01 - 20 by weight when the fire resistant oxide is 100 by weight.

6. A method of purifying an exhaust gas in which a nitrogen oxide contained in the exhaust gas in an oxidative atmosphere is reduced and eliminated, comprising the step of:
   causing the exhaust gas to contact a catalyst which contains gallium as a main catalyst and a fire resistant oxide as a support (except for zeolite) such that the exhaust gas is reduced to $N_2$ and $H_2O$.

7. A method of purifying an exhaust gas according to claim 6, wherein the nitrogen oxide in the exhaust gas is reduced and eliminated under the conditions where the reaction temperature is 200 - 800°C, and the overall THC concentration/NO$_x$ concentration of the hydrocarbon is 0.5 - 50.

8. A method according to claim 7, wherein the hydrocarbon is additionally applied.

9. A method according to claim 6, wherein the catalyst includes at least one selected from the group of iron, nickel, cobalt, zirconium, manganese, chromium, molybdenum, copper and rare earth elements of transition elements as promoters.

10. A method according to claim 9, wherein the gallium and promoter each are a composition convertible to an oxide when the catalyst is prepared or the reaction occurs.

11. A method according to claim 6, wherein the gallium content of the catalyst is 0.01 - 10 by weight when the fire resistant oxide is 100 by weight.

12. A method according to claim 9, wherein the promoter content of the catalyst is 0.01 - 20 by weight when the fire resistant oxide is 100 by weight.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 060 740 (PROCATALYSE)<br>* the whole document *<br>--- | 1-6,8-12 | B01D53/36<br>B01J23/08 |
| A | US-A-3 198 749 (ELROY MERLE)<br>--- | | |
| A | FR-A-2 318 131 (BRITISH PETROLEUM COMPANY)<br>----- | | |

TECHNICAL FIELDS SEARCHED (Int. Cl.5 )

B01D
B01J

The present search report has been drawn up for all claims

| Place of search | Date of completion of the search | Examiner |
|---|---|---|
| THE HAGUE | 22 MAY 1992 | BOGAERTS M.L.M. |

EPO FORM 1503 03.82 (P0401)